# EUROPEAN PATENT SPECIFICATION

(11) **EP 0 346 923 B1**
(45) Date of publication and mention of the grant of the patent: **15.09.1993**
(21) Application number: 89110983.7
(22) Date of filing: 16.06.1989
(51) Int. Cl.: B60B 3/08, B60B 5/02

(54) **Wheel for light vehicle and disc used therefor**
Scheibenrad für ein leichtes Fahrzeug
Roue à disques pour véhicule léger

(30) Priority: 17.06.1988 JP 150468/88; 20.07.1988 JP 95932/88; 01.09.1988 JP 115246/88
(43) Date of publication of application: 20.12.1989
(73) Proprietor: SUGINO CYCLE INDUSTRIES, LTD., Nara-shi Nara 630 (JP); NIPPON STEEL CHEMICAL CO., LTD., Tokyo (JP)
(72) Inventor: Yashiro, Tadashi, Nara-shi Nara-ken (JP); Nishimoto, Takafumi, Ichihara-shi Chiba-ken (JP)
(74) Representative: Strehl Schübel-Hopf Groening & Partner

(56) References cited:
- DE-U- 8 806 988
- FR-A- 909 095
- GB-A- 105 964
- GB-A- 2 180 510
- US-A- 1 938 862

## Description

The present invention relates to discs for wheels used in various light vehicles such as bicycles, motor bicycles and the like, and further to a wheel comprising such discs.

The wheels used in light vehicles such as bicycles and motor bicycles include a spoke wheel wherein a multiplicity of spokes are radially stretched between a hub of a rotational shaft and a rim as a circumferential member. With this conventional spoke wheel, since a load applied to the hub or the rim is dispersed to radially disposed spokes as substantially uniform tension, the load is not concentrated on one point on the wheel, and thus the wheel has a high resistance to shock. Thus, the wall thickness of the rim can be reduced to some degree and the wheel employing this kind of rim has been widely used as a wheel having sufficient strength for practical use.

Conversely, this conventional spoke wheel has the drawbacks that a large air flow drag force is exerted on the spokes when the wheel rotates and that the power transmitted to a rotating shaft cannot be effectively used.

Recently, to reduce the air flow drag force, a so-called disc wheel has been used for racing bicycles which is substantially formed to a disc shape.

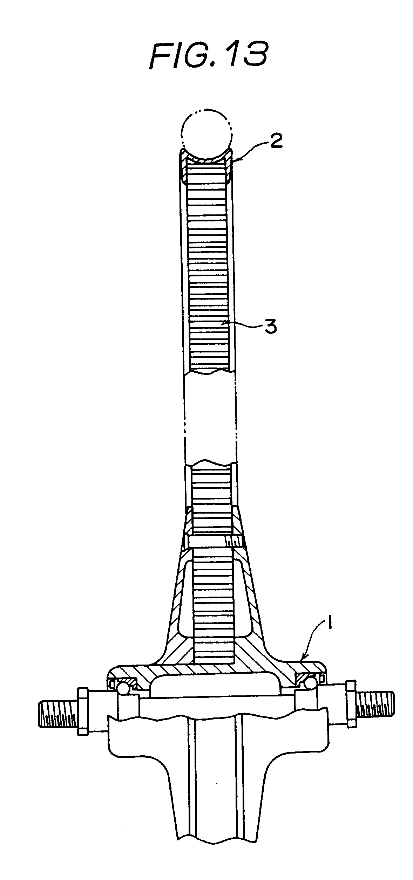

As shown in Fig. 13, this conventional disk wheel comprises a disc member interposed between a hub 1 and a rim 2 and the hub 1 and the rim 2 are integrally formed by the disk member 3, wherein the strength and rigidity of the wheel is provided by a principle completely different from that of the above spoke wheel. More specifically, the strength and the rigidity of the spoke wheel is provided by the tensile strength of the spokes disposed radially, whereas the strength and rigidity of the disc wheel directly depends on the strength and rigidity of the disc member 3 interposed between the hub 1 and the rim 2.

As a result, in order to increase the strength and rigidity of the wheel, the strength and rigidity of the disc member must be increased and the rim and the hub must be integrally formed with the disc member to provide a single flat circular plate which is not deformed by an external force.

Taking the above into consideration, the conventional disc wheel comprises the hub 1 and the rim 2 directly formed at the center and around the outer circumferential edge of the disc member 3 employing a honeycomb structure to provide strength and rigidity, or the disc member 3 composed of a special material and integrally formed with the rim 2 and the hub 1 by bonding.

The increase in the strength and rigidity of the disc member, however, is inevitably accompanied by the complexity of the structure thereof and the increase in the thickness of a material constructing the disc member, and then the disc member has a problem that it is as strong as the spoke wheel at the sacrifice of the weight thereof.

Further, as described above, since the hub 1, the rim 2 and the disc member 3 are integrally formed, if a part of the rim 2 is damaged, for example, the replacement of the rim 2 only is almost impossible, and even if it is possible, the replacement is more troublesome than the repair of the spoke wheel.

Therefore, the conventional disc wheel also has a drawback that when a part of it is damaged, it is difficult to repair only this part but the overall wheel must be replaced.

GB-A-105964 discloses a disc member for a wheel according to the preamble of claim 1 and a wheel comprising a pair of disc members attached to a hub according to the preamble of claim 4.

This known wheel is for use with an automobile and comprises screw setting means including screws which are arranged parallel to the wheel's axis or are fixed to the rim in a radially outward direction. This requires a specially designed rim, or, with other words, rims for conventional spoke wheels cannot be connected to such a wheel or disc. Further, the screws and nuts used for connecting the rim to the discs may cause an undesirable air flow drag force.

It is therefore object of the invention to provide a disc member and a wheel for a light vehicle, which is capable of being assembled to a conventionally available rim which has a small drag force to air flow while rotating and is capable of being easily repaired when damaged.

These objects are met according to the invention as defined in the characterizing parts of claims 1 and 4.

In the wheel for the light vehicles according to the present invention, since the disc member is stretched between the hub and the rim, a load imposed on the hub and the rim is exerted on the disc member as tension. Therefore, the disc member may be composed of any sheet or plate member as long as it has sufficient tensile strength. A material of the member may be selected from a thin metal plate, a synthetic resin such as a polyethylene terephthalate resin, a nylon resin, a polypropylene resin, a polyimide resin, a fluorine resin and the like or a composite material of a fiber material such as a polyaramide fiber, a carbon fiber, a glass fiber and the like and a synthetic resin.

In addition, the disc member may be coupled with the hub by any coupling means as long as the means enables the disc member to be detachably coupled with the hub. For example, the disc member may be coupled with the hub by a method that through holes are defined around the inner circumferential edge of the opening provided at the center of the disc member and the through holes are fixed to a flange of the hub by screws or the disc member may be pressed into contact with the hub using a component force produced when the disc member is stretched.

Further, the structure of coupling spokes with a rim used in a spoke wheel may be used as it is as a screw setting means for coupling the disc member with the rim. More specifically, in this case, a nipple composed of a locking member to be engaged with the outer circumferential edge of the disc member and a screw member to be inserted into the mounting hole provided with the rim is used, and tension is applied to the disc member by tightening the nipple. With this method, the wheel of the present invention can be fabricated using a usual rim without the need for a special rim, wherein, an annular member composed of a fiber material or a metal wire is preferably provided with the outer circumferential edge of the disk member to enable the locking member of the nipple to be engaged with this annular member to apply tension to the disc member, whereby the tension exerted to the disc member from the load imposed on the hub is prevented from concentrating on the portion where the disc member is engaged with the locking member.

With this arrangement, one of a pair of the disc members disposed on the opposite sides of the hub and the rim functions like a group of the spokes disposed on one side of the spoke wheel. Therefore, the wheel for the light vehicles according to the present invention is provided with strength and rigidity as a wheel by the same principle as that of the conventional spoke wheel.

Further, since a load applied to the wheel is dispersed over the entire surface of the disc member as tension, the tension exerted on a unit cross sectional area of the disc member is smaller than that of the spokes of the spoke wheel so that the weight of the disc members can be made lighter than the overall weight of the spokes of the spoke wheel.

In addition, as described above, the disc member can be composed of a synthetic resin sheet or a composite material of a fiber material and a synthetic resin, whereby the disc member can be made more lighter by using this light material having high tensile strength.

With this arrangement of the present invention, the wheel having a resistance to shock equal to that of the spoke wheel can be provided by stretching the disc members between the hub and the rim, whereby not only the structure member (disc member) interposed between the hub and the rim is made lighter than the conventional disc wheel but also it can be made lighter than the spoke wheel.

In addition, since a pair of the disc members stretched between the hub and the rim entirely cover the opposite sides of the wheel, an air resistance caused when the wheel rotates can be reduced like the disc wheel.

Further, since the disc member, the hub and the rim are detachably coupled, respectively, when a part of them is damaged, only the damaged part can be replaced.

Further, when the wheel is fabricated, a pair of the disc members are assembled between the hub and the rim, and thus it takes less labor than the spoke wheel in fabrication and its parts can be managed more easily. In addition, the fabrication thereof can be easily automated.

### Brief Description of the Drawings

Fig. 1 is a partial cross sectional view of a wheel for light vehicles of a first embodiment according to the present invention;
Figs. 2 and 3 are a cross sectional view and a side elevational view illustrative of a circumferential edge portion of a disc member.
Fig. 4 is a partial side elevational view of a first embodiment;
Fig. 5 is a side elevational view illustrative of a screw member shown in Fig. 1;
Fig. 6 is a perspective view of a disc member of a second embodiment according to the present invention;
Fig. 7 is a cross sectional view illustrative of a state of a disc member and a rim set by screws of a second embodiment;
Fig. 8 is a partial cross sectional view of a modification of a nipple for stretching a disc member to a rim;
Fig. 9 is a partial cross sectional view of a wheel for light vehicles of a third embodiment according to the present invention;
Fig. 10 is a perspective view illustrative of an assembled state of a wheel for light vehicles of a third embodiment;
Fig. 11 is a partial side elevational view of a disc member of a third embodiment;
Fig. 12 is a side elevational view of a hub of a third embodiment; and
Fig. 13 is a cross sectional view of a conventional disc wheel.

### Detailed Description of the Preferred Embodiments

A wheel for light vehicles and a disc member used therefor according to the present invention will be described below in detail with reference to the accompanying drawings.

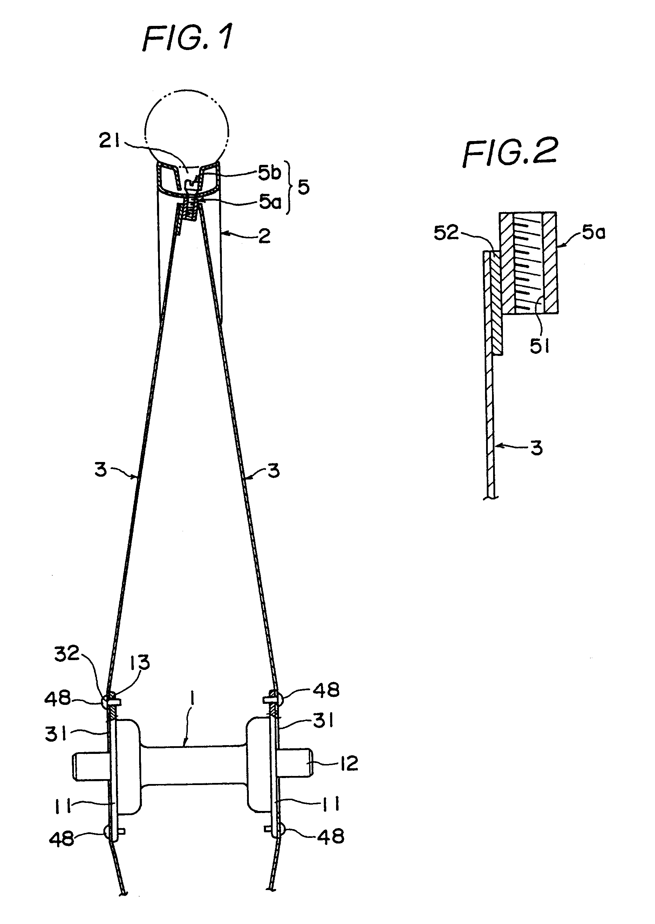

Fig. 1 through Fig. 5 show a first embodiment according to the present invention. The wheel for the light vehicles in the first embodiment comprises a hub 1 provided with a pair of flanges 11 for fixing a disc member 3, a rim 2 including mounting holes 21 defined at prescribed pitches and passing therethrough in a radial direction and a pair of disc members 3 stretched between the hub 1 and the rim 2.

In this embodiment, the disc member 3 is composed of a circular-shaped thin metal sheet having a diameter substantially as large as the inside diameter of the rim 2. The disc member 3 has an opening 31 defined at the center thereof to enable a rotational shaft 12 of the hub 1 to pass therethrough and through holes 32 defined around the inner circumferential edge thereof and corresponding to screw holes 13 defined to the flanges 11 at prescribed pitches. Thus, as shown in Fig. 1, after a screw 48 is inserted into each through hole 32 from the outside of the disc member 3, it is threadedly engaged with a screw hole 13 of the flange 11 so that the inner circumferential edge of the disc member 3 is fixed to the flange 11.

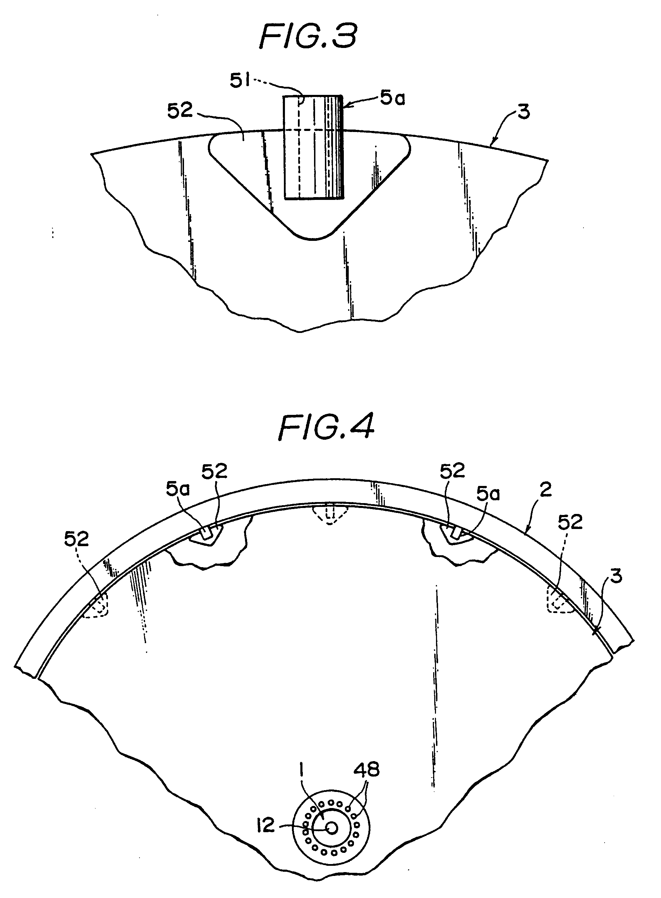

Further, as shown in Fig. 1, the outer circumferential edge of the disc member 3 is fixed to the rim by a nipple 5 composed of a cylindrical locking member 5a with a female screw 51 defined therethrough and a screw member 5b threadedly engaged with the locking member 5a. As shown in Figs. 2 and 3, the locking member 5a is welded to a substantially triangular metal plate 52 with its one end projected, and then the metal plate 52 is fixed to the inner surface side of the disc member 3 by spot welding. Note that the locking members 5a are disposed to the disc member 3 at pitches twice those of the mounting holes 21 defined to the rim 2.

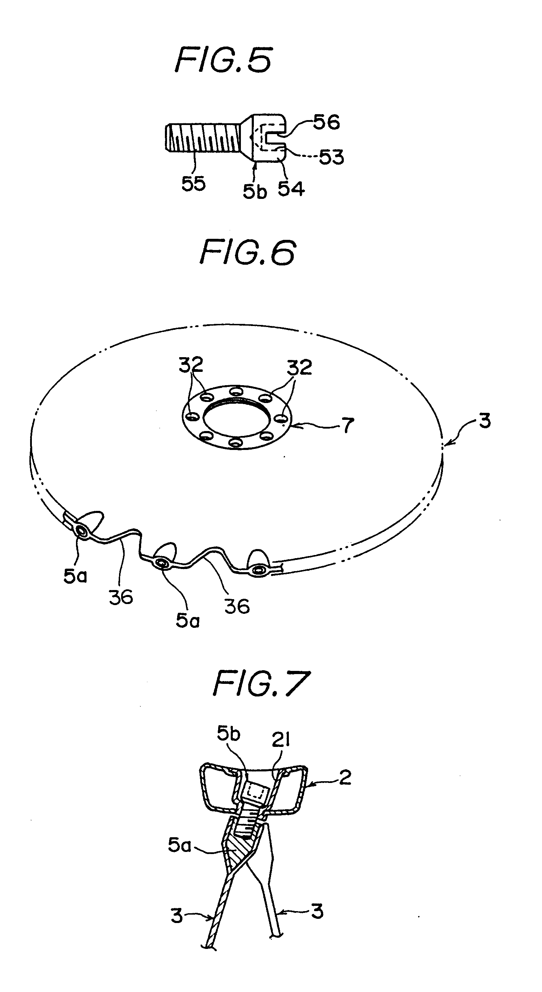

Conversely, the rim 2 to which the outer circumferential edge of the disc member 3 is fixed is a usual rim having thirty two mounting holes 21, and, as shown in Fig. 1, has an opening diameter on the side of the inner circumference thereof which is smaller than that of an opening diameter on the side of the outer circumference. The screw member 5b having a male screw defined thereto (see Fig. 5) is inserted into the mounting hole 21. This screw member 5b is composed of a head portion 54 having a hexagonal hole 53 defined therein and the male screw 55 projecting from the head portion 54, and when the screw member 5b is inserted into the mounting hole 21, the head portion 54 is locked at the opening on the inner circumference side of the rim 2.

Therefore, as shown in Fig. 1, the threading engagement of the screw member 5b passing through the mounting hole 21 with the locking member 5a provided with the disc member 3 enables the outer circumferential edge of the disc member 3 to be fixed to the rim 2. In addition, the increase in a threading amount of the screw member 5b into the locking member 5a cuases the locking member 5a to be pulled toward the rim 2 side to stretch the disc member 3.

With the wheel for the light vehicles of this embodiment arranged as above, the wheel having the opposite sides thereof covered with the disc members 3 is completed in such a manner that each inner circumferential edge of a pair of the disc members 3 is fixed to the flange 11 of the hub 1, and then, as shown in Fig. 4, the locking members 5a provided with one of the disc member 3 and the locking members 5a provided with the other of the disc member 3 are alternately fixed to a series of the mounting holes 21.

In this wheel, the balance of tension exerted on the disc members 3 can be adjusted by adjusting a threading amount of the screw members 5b threadedly engaged with the locking members 5a so that the balance of the wheel can be adjusted in the same procedure as that of the conventional spoke wheel. Although an Allen wrench suitable to the hexagonal hole 53 is used to thread the screw member 5b, a minus driver may be used when a groove portion 56 is defined, as shown in Fig. 5.

Next, a second embodiment shown in Fig. 6 and Fig. 7 will be described.

A disc member 3 in this embodiment is composed of a synthetic resin sheet and employs, for example, a synthetic resin material in which fibers such as Kevlar fibers, carbon fibers or the like is impregnated.

Therefore, as shown in Fig. 6, the disc member 3 has the inner circumferential edge thereof provided with a metal annular member 7 integrally fixed to the disc member 3, and through holes 32 are defined to this annular member 7. In addition, the disc member 3 has the outer circumferential edge thereof to be fixed to a rim 2 and this outer circumferential edge is provided with locking members 5a integrally fixed thereto together with the disc member 3 and including female screws defined thereto. These through holes 32 are defined and the locking members 5a are disposed at the same pitches as those in the first embodiment. When the disc member 3 is formed of a synthetic resin, the metal annular member 7 and the locking members 5a are integrally combined with the disc member 3 using a so-called inserting formation method or the like when the resin material is cured.

In this embodiment, the disc member 3 is also stretched between the same hub 1 and rim 2 as those in the first embodiment. Since, however, the disc 3 is composed of a synthetic resin sheet of high tensile strength, it is lighter and stronger than the disc member of the first embodiment.

In addition, with the disc member 3, since the locking members 5a are integrally formed in the synthetic resin sheet, the portion where the locking members 5a are disposed is thicker than the other portion. Thus, as shown in Fig. 6, cutouts 36 are defined between the locking members 5a adjacent each other around the outer circumferential edge of the disc member 3 to prevent a pair of the disc members 3 fixed in the rim 2 from being brought into contact with each other in the vicinity of the inner circumference of the rim 2.

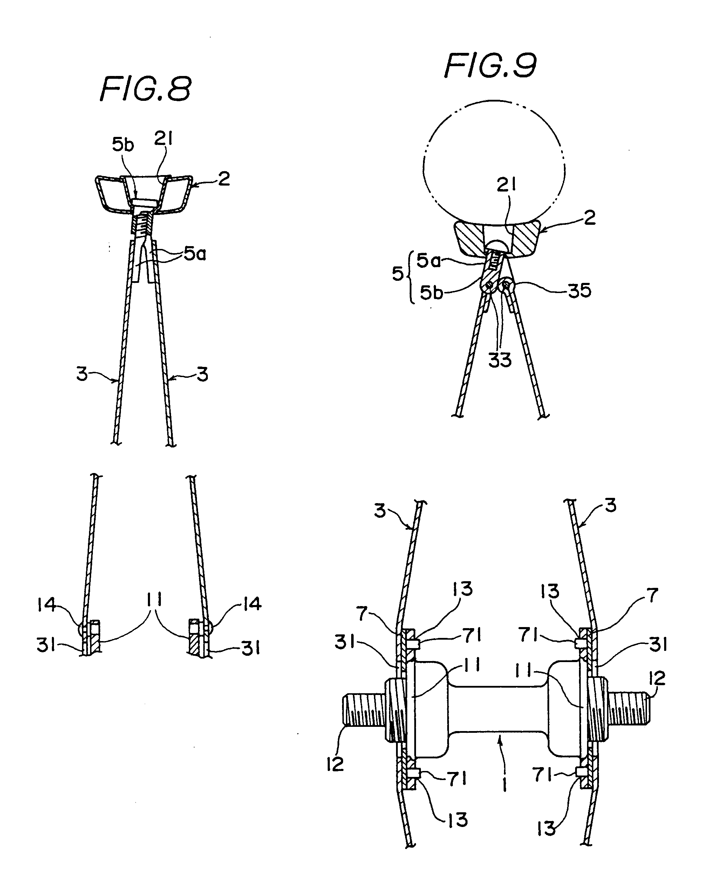

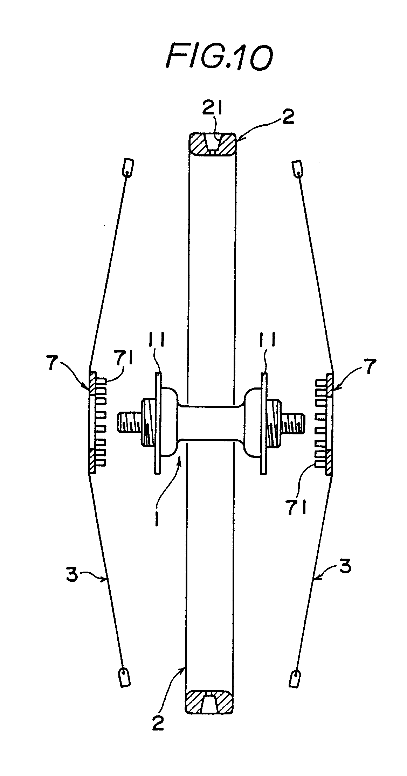

Next, a third embodiment shown in Fig. 9 through Fig. 12 will be described.

In this embodiment, a disc member 3 is composed of a composite material of a synthetic resin sheet and a fiber material like the second embodiment, but the coupling structure of the disc member 3 with a hub 1 and the coupling structure of locking members 5 with the disc member 3 are different from those of the second embodiment.

As shown in Fig. 9 through Fig. 11, an annular member 7 fixed to the inner circumferential edge of the disc 3 has a multiplicity of pins 71 standing thereon at equal pitches, whereas a flange 11 of the hub 1 has through holes 13 defined therethrough which correspond to the respective pins 71. When the annular member 7 is fitted to the flange 11 from the outside of the hub 1 in an axial direction to enable the pins 71 to be engaged with the through holes 13, the inner circumferential edge of the disc 3 is tentatively fixed to the hub 1. Since the width of the rim 2 is usually narrower than the interval between the flanges 11 of the hub 1 in the wheel of the light vehicles, when the outer circumferential edge of the disc member 3 is fixed to the rim 2 and tension is applied thereto, a component force directed to the center of the hub 1 in the axial direction thereof is applied to the annular member 7 tentatively fixed to the hub 1. As a result, as the disc member 3 is stretched, the annular member 7 is pressed against the flange 11 so that the disc 3 can be finally fixed to the hub 1.

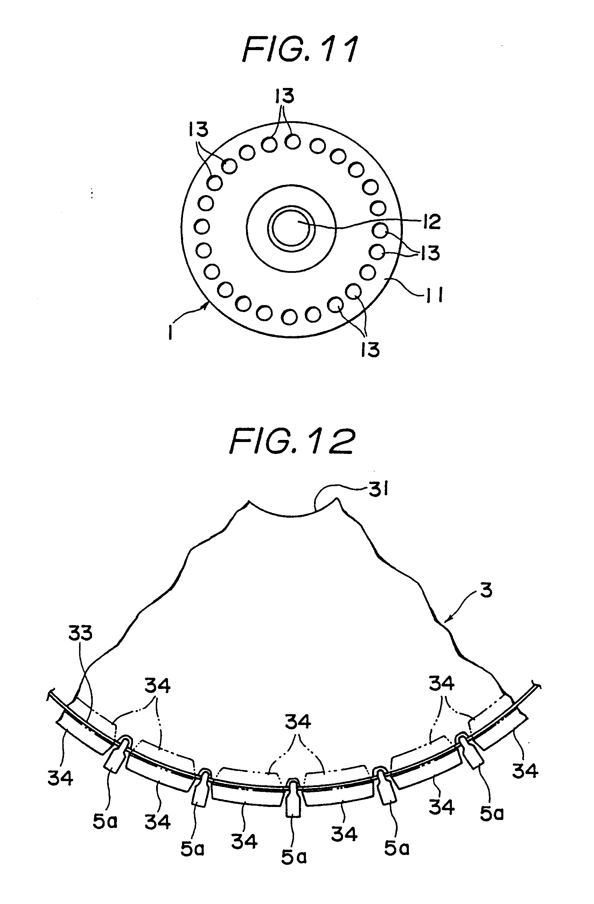

Further, as shown in Figs. 9 and 12, the outer circumferential edge of the disc member 3 is provided with a multiplicity of bag-shaped portions 35 formed by bending projecting pieces 34 and a reinforcing annular member 33 composed of a fiber material is inserted into each of the bag-shaped portions 35, whereas locking members 5a engaged with the reinforcing annular members 33 are disposed among the bag-shaped portions 35. Therefore, when the locking member 5a is threadedly engaged with a screw member 5b attached to the rim 2 in this disc member 3, tension is exerted to the disc member 3 through the reinforcing annular member 33 so that the tension does not concentrate on the portion where the locking member 5a is engaged with the disk member 3.

Note that in the first and second embodiments, the female screws may be replaced by the male screws and vice versa, wherein, as shown in Fig. 8, the locking member 5a provided with the male screw is fixed to the outer circumferential edge of the disc member 3 and threadedly engaged with the screw member 5b provided with the female screw and inserted into the mounting hole 21 of the rim 2. With this arrangement, the same nipple as a spoke nipple employed by the conventional spoke wheel can be employed.

Further, each of the disc members 3 in the above embodiments is composed of a single sheet or plate member, but it may be composed of a plurality of sheet or plate members.

## Claims

1. A disc member (3) used for a wheel of light vehicles comprising:
an outer circumferential edge detachably coupled with a rim (2) by a screw setting means (5);
an opening (31) defined at the center thereof and adaptable to a hub (1);
an inner circumferential edge of said opening (31) detachable coupled with said hub (1); and
said disc member being shaped to a flat circular plate and interposed between said hub (1) and rim (2) of said wheel, characterized in that said screw setting means (5) comprises locking members (5a) engaged with the outer circumferential edge of said disc member (3), each including a male or female screw to be threadedly engaged with screw members (5b) each having a female or male screw and inserted into said mounting holes (21) from the outer circumferential side of said rim (2).

2. A disc member (3) according to claim 1, wherein said disc member is composed of a composite member of a synthetic resin and a fiber material having large tensile strength.

3. A disc member (3) according to claim 1 or claim 2, wherein said disc member (3) has an outer circumferential edge provided with reinforcing annular members (33) and said rim (2) is coupled with said disc member (3) through said reinforcing annular members (33).

4. A wheel for light vehicles comprising:
a hub (1) including a rotating shaft (12);
a rim (2) having mounting holes (21) defined therethrough in radial directions at predetermined pitches;
a pair of disc members (3) composed of a single or a plurality of sheet or plate members and stretched between said hub (1) and said rim (2) for coupling the former with the latter; and
each of said disc members (3) having an opening (31) adaptable to said hub (1) defined at the center thereof and detachably coupled with said hub and a circumference detachably coupled with said rim (2) by a screw setting means (5), characterized in that said screw setting means (5) comprises locking members (5a) engaged with the outer circumferential edge of said disc member (3), each including a male or female screw to be threadedly engaged with screw members (5b) each having a female or male screw and inserted into said mounting holes (21) from the outer circumferential side of said rim (2).

5. A wheel according to claim 4, wherein said disc member (3) is composed of a composite member of a synthetic resin and a fiber material having high tensile strength.

6. A wheel according to claim 4 or 5, wherein said disc member (3) has an outer circumferential edge provided with reinforcing annular members (33) and said rim (2) is coupled with said disc member (3) through said reinforcing annular members.

7. The disc member of any of claims 1 to 3 or whel of any of claims 4 to 6, wherein said locking member (5a) is in the form of a male screw and said screw member (5b) is a female screw, preferably in form of a convential spoke nipple.

## Patentansprüche

1. Scheibenelement (3) für ein Leichtfahrzeug-Rad mit:
einer äußeren Umlaufkante, die demontierbar mit einer Felge (2) mittels einer Schraubenfixierung (5) verbunden ist;
einer Öffnung (31), die sich in ihrem Zentrum befindet und auf eine Nabe (1) anwendbar ist;
einer inneren Umlaufkante der Öffnung (31), die demontierbar mit der Nabe (1) verbunden ist; und
wobei das Scheibenelement zu einer flachen, kreisförmigen Platte geformt und zwischen der Nabe (1) und der Felge (2) des Rades angeordnet ist,
dadurch gekennzeichnet, daß
die Schraubenfixierung (5) an der äußeren Umlaufkante des Scheibenelements (3) angreifende Verriegelungselemente (5a) aufweist, wobei jedes ein Außen- oder ein Innengewinde zum Eingreifen von Schraubenelementen (5b) durch Einschrauben enthält, die jedes ein Innen- oder ein Außengewinde aufweisen und in Befestigungsöffnungen (21) von der außen umlaufenden Seite der Felge (2) eingeführt sind.

2. Scheibenelement (3) gemäß Anspruch 1, wobei das Scheibenelement aus einem Verbundstoff aus einem Kunstharz und einem Glasfaserwerkstoff mit hoher Zugfestigkeit aufgebaut ist.

3. Scheibenelement (3) gemäß Anspruch 1 oder 2, wobei das Scheibenelement (3) eine, mit ringförmigen Verstärkungselementen (33) versehene äußere Umlaufkante aufweist und die Felge (2) mit dem Scheibenelement durch die ringförmigen Verstärkungselemente (33) hindurch verbunden ist.

4. Leichtfahrzeug-Rad mit:
einer eine rotierende Achse (12) umfassenden Nabe (1);
einer Felge (2) mit darin in den radialen Richtungen mit bestimmten Abständen festgelegten Befestigungsöffnungen (21);
ein Scheibenelement-Paar (3), das aus einem oder mehreren Blatt- oder Plattenelementen aufgebaut ist und sich zwischen der Nabe (1) und der Felge (2) zur Verbindung der ersteren mit der letzteren erstreckt; und
wobei jedes Scheibenelement (3) eine auf die Nabe (1) anwendbare Öffnung (31), die sich in ihrem Zentrum befindet und demontierbar mit der Nabe verbunden ist, und
eine Peripherie , die demontierbar mit der Felge (2) mittels einer Schraubenfixierung (5) verbunden ist, aufweist,
dadurch gekennzeichnet, daß
die Schraubenfixierung (5) an der äußeren Umlaufkante des Scheibenelements (3) angreifende Verriegelungselemente (5) aufweist, wobei jedes cin Außen- oder ein Innengewinde zum Eingreifen von Schraubenelementen (5b) durch Einschrauben enthält, die jedes ein Innen- oder ein Außengewinde aufweisen und in Befestigungsöffnungen (21) von der außen umlaufenden Seite der Felge (2) eingeführt sind.

5. Rad gemäß Anspruch 4, wobei das Scheibenelement (3) aus einem Verbundstoff aus einem Kunstharz und einem Glasfaserwerkstoff mit hoher Zugfestigkeit aufgebaut ist.

6. Rad gemöß Anspruch 4 oder 5, wobei das Scheibenelement (3) eine, mit ringförmigen Verstärkungselementen (33) versehene äußere Umlaufkante aufweist und die Felge (2) mit dem Scheibenelement durch die ringförmigen Verstärkungselemente (33) hindurch verbunden ist.

7. Scheibenelement gemäß einem der Ansprüche 1 bis 3 oder Rad gemäß einem der Ansprüche 4 bis 6, wobei das Verriegelungselement (5a) als Schraubenspindel ausgebildet und das Schraubenelement (5b) eine Schraube mit Innengewinde, bevorzugt in Form eines konventionellen Nippels für Speichen, ist.

## Revendications

1. Elément formant disque (3) utilisé pour une roue de véhicules légers, comportant :
un bord circonférentiel extérieur relié d'une manière détachable à une jante (2) à l'aide d'un moyen de fixation de vis (5);
un orifice (31) défini en son centre et adaptable à un moyeu (1);
un bord circonférentiel intérieur dudit orifice (31) relié d'une manière détachable audit moyeu (1); et
ledit élément formant disque étant conformé pour avoir la configuration d'une plaque circulaire plane et interposé entre ledit moyeu (1) et ladite jante (2) de ladite roue, caractérisé en ce que ledit moyen de fixation de vis (5) comporte des organes de blocage (5a) en prise avec le bord circonférentiel extérieur dudit élément formant disque (3), dont chacun comprend une vis mâle ou femelle destinée à venir en prise d'une manière vissée avec des organes de vissage (5b) comprenant chacun une vis mâle ou femelle et insérés dans des trous de montage (21) depuis le côté circonférentiel extérieur de ladite jante (2).

2. Elément formant disque (3) selon la revendication 1, dans lequel ledit élément formant disque est constitué d'un élément composite fait d'une résine synthétique et d'une matière en fibres ayant une résistance à la traction importante.

3. Elément formant disque (3) selon la revendication 1 ou la revendication 2, dans lequel ledit élément formant disque (3) possède un bord circonférentiel extérieur pourvu d'organes de renforcement annulaires (33), ladite jante étant reliée audit élément formant disque (3) par l'intermédiaire desdits organes de renforcement annulaires (33).

4. Roue pour véhicules légers, comportant :
un moyeu (1) contenant un arbre de rotation (12);
une jante (2) pourvue de trous de montage (21) définis à travers elle dans des directions radiales suivant des écartements prédéterminés;
deux éléments formant disques (3) constitués d'un seul ou de plusieurs éléments en feuille ou en plaque et tendus entre ledit moyeu (1) et ladite jante (2) pour relier le premier à la seconde; et
chacun desdits éléments formant disques (3) comportant un orifice (31) adaptable audit moyeu (1), qui est défini en son centre et relié d'une manière détachable audit moyeu, et une circonférence reliée d'une manière détachable à ladite jante (2) à l'aide d'un moyen de fixation de vis (5), caractérisée en ce que ledit moyen de fixation de vis (5) comporte des organes de blocage (5a) en prise avec le bord circonférentiel extérieur dudit élément formant disque (3), dont chacun comprend une vis mâle ou femelle destinée à venir en prise d'une manière vissée avec des organes de vissage (5b) comprenant chacun une vis mâle ou femelle et insérés dans lesdits trous de montage (21) depuis le côté circonférentiel extérieur de ladite jante (2).

5. Roue selon la revendication 4, dans laquelle ledit élément formant disque (3) est constitué d'un élément composite fait d'une résine synthétique et d'une matière en fibres ayant une résistance à la traction importante.

6. Roue selon la revendication 4 ou 5, dans laquelle ledit élément formant disque (3) possède un bord circonférentiel extérieur pourvu d'organes de renforcement annulaires (33), ladite jante (2) étant reliée audit élément formant disque (3) par l'intermédiaire desdits organes de renforcement annulaires.

7. Elément formant disque selon l'une quelconque des revendications 1 à 3 ou roue selon l'une quelconque des revendications 4 à 6, dans lesquels ledit organe de blocage (5a) se présente sous la forme d'une vis mâle et ledit organe de vissage (5b) consiste en une vis femelle, de préférence sous la forme d'un écrou de rayon conventionnel.
